# EUROPÄISCHE PATENTSCHRIFT

(11) **EP 3 369 977 B1**
(45) Veröffentlichungstag und Bekanntmachung des Hinweises auf die Patenterteilung: **02.08.2023**
(21) Anmeldenummer: 17020085.1
(22) Anmeldetag: 02.03.2017
(51) Int. Cl.: F16L 5/08

(54) **VERWENDUNG EINES PRESSDICHTUNGSSYSTEMS ZUM EINSETZEN IN EINE ÖFFNUNG**
USE OF A PRESS SEAL SYSTEM FOR SEALING AGAINST A CONDUIT
UTILISATION D'UN SYSTÈME DE JOINT À COMPRESSION DESTINÉ À ASSURER L'ÉTANCHÉITÉ CONTRE UNE CONDUITE

(43) Veröffentlichungstag der Anmeldung: 05.09.2018
(73) Patentinhaber: Hauff-Technik GmbH & Co. KG, 89568 Hermaringen (DE)
(72) Erfinder: Kurz, Ralf, 89537 Giengen (DE)
(74) Vertreter: König Szynka Tilmann von Renesse Patentanwälte Partnerschaft mbB München

(56) Entgegenhaltungen:
- EP-A1- 0 994 287
- EP-A1- 3 220 031
- FR-A1- 2 935 329
- US-B1- 6 409 179

## Beschreibung

Die vorliegende Erfindung betrifft eine Verwendung eines Pressdichtungssystems zum Einsetzen in einer Öffnung und Abdichten der Öffnung gegen eine Leitung.

Pressdichtungen der in Rede stehenden Art werden bspw. zum Abdichten einer Durchgangsöffnung in einer Wand gegen eine hindurchgeführte Leitung genutzt. Die Wand-Durchgangsöffnung, bspw. eine Kernbohrung, hat einen Innendurchmesser, der größer als ein Außendurchmesser der hindurchgeführten Leitung ist, sodass zwischen der Leitung und einer die Durchgangsöffnung begrenzenden Laibung ein Ringraum frei bleibt. In diesen Ringraum wird die Pressdichtung gesetzt und zum Abdichten verspannt. Dazu weist die Pressdichtung einen den Ringraum im Wesentlichen ausfüllenden Elastomerkörper und eine Spanneinrichtung auf, mittels welcher der Elastomerkörper verspannt, nämlich axial gestaucht werden kann. Infolge des axialen Stauchens weitet sich der Elastomerkörper radial, legt sich also nach außen dichtend an die Laibung und nach innen an die Au-βenmantelfläche der Leitung an. Es wird also zugleich eine Dichtung zur Laibung und zur Leitung hin aufgebaut.

Aus der FR 2 935 329 A1 ist eine Kupplung bzw. Durchführung bekannt, die in einer dünnen Gehäusewand montiert werden kann. Dazu weist ein Elastomerkörper der Durchführung eine äußere Lippe auf, die an der Wand gestaucht wird. Ferner gibt es einen axialen Kragen, der auf ein Kupplungsstück angedrückt werden kann.

Aus der EP 0 994 287 A1 ist ein Dichtelement zum Verbinden von Rohrstücken bekannt, das in montierter Position radial zwischen Rohstücken unterschiedlicher Größe angeordnet sitzt.

Aus der US 6 409 179 B1 ist eine Dichtbuchse mit einem Elastomerkörper bekannt, der in der Buchse gestaucht wird und zusätzlich einen axialen Kragen aufweist.

Aus der nachveröffentlichten EP 3 220 031 A1 ist ein Pressdichtungssystem bekannt, das eine Pressdichtung mit einem Elastomerkörper und zusätzlich ein Dichtelement aufweist. Dabei gibt es insbesondere Varianten, bei denen der Elastomerkörper und das Dichtelement mehrteilig zueinander sind.

Der vorliegenden Erfindung liegt das technische Problem zugrunde, eine vorteilhafte Verwendung eines Pressdichtungssystems mit Elastomerkörper und Spanneinrichtung anzugeben.

Erfindungsgemäß wird diese Aufgabe mit den Merkmalen gemäß Anspruch 1 gelöst. Das Pressdichtungssystem weist in Ergänzung zu Elastomerkörper und Spanneinrichtung ein Dichtelement auf, welches von der Verspannung und damit Verformung des Elastomerkörpers entkoppelt ist. Das Pressdichtungssystem wird dann durch Verspannen des Elastomerkörpers in der Öffnung installiert, es wird also eine Außenumfangsfläche des Elastomerkörpers nach radial außen dichtend an eine die Öffnung begrenzende Laibung angepresst. Dabei wird nun aber bewusst nicht die der Außenumfangsfläche radial entgegengesetzte Innenumfangsfläche zum Dichten gegen die Leitung genutzt, sondern ist zu diesem Zweck das Dichtelement vorgesehen. Dieses kann sich bspw. in Form einer Elastomerhülse axial von dem Elastomerkörper weg erstrecken und dann bspw. mit einer Spannschelle gegen die Leitung angedrückt werden, siehe unten im Detail und die Figuren zur Illustration.

Ganz allgemein kann das Entkoppeln der Abdichtung zu Laibung und Leitung hin bspw. insoweit vorteilhaft sein, als das Verspannen des Elastomerkörpers (Dichtung zur Laibung hin) mehr Fachkenntnis bzw. auch ein gesondertes Werkzeug erfordern kann. So kann bspw. das Anziehen von Spannbolzen, mittels welchen an den axial einander entgegengesetzten Stirnseiten des Elastomerkörpers angeordnete Presskörper aufeinander zubewegt werden, das Einhalten bestimmter Drehmoment-Grenzwerte erfordern. Ist das Drehmoment und damit die Spannkraft zu gering, könnte die Dichtwirkung beeinträchtigt sein, wohingegen ein zu großes Drehmoment schlimmstenfalls eine Beschädigung des Elastomerkörpers zur Folge haben könnte. Bei der Montage der Pressdichtung können also besondere Rahmenbedingungen zu berücksichtigen sein und ist gegebenenfalls Spezialwerkzeug erforderlich, etwa ein Drehmomentschlüssel.

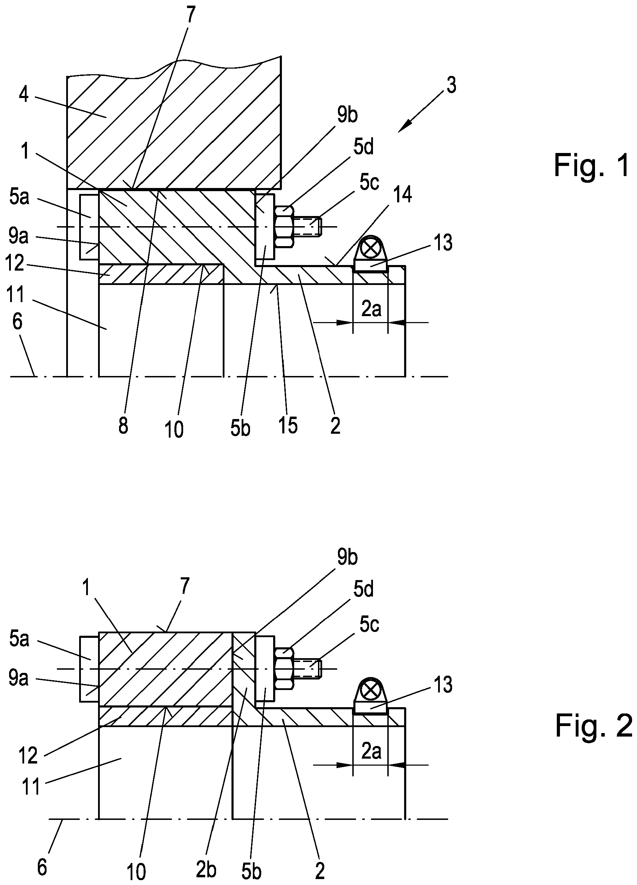

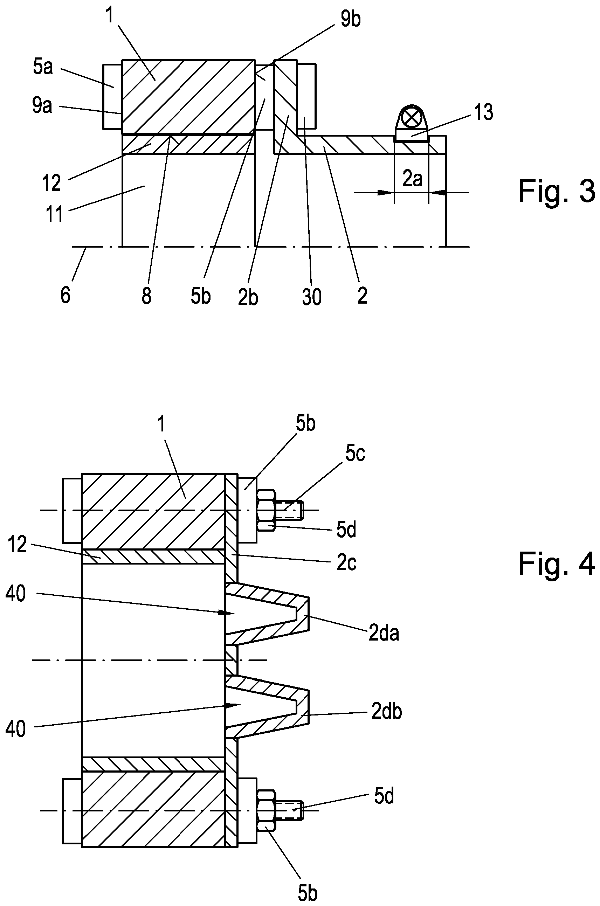

Will dann später bspw. ein Elektroinstallateur ein Kabel durch die Öffnung verlegen, sind diesem Installateur zum einen die speziellen Montageanforderungen der jeweiligen Pressdichtung mitunter nicht bekannt und hat er zudem auch nicht zwingend das geeignete Spezialwerkzeug zur Hand. Für eben bspw. den Elektroinstallateur kann es dann bei dem vorliegenden Pressdichtungssystem erheblich einfacher sein, das Kabel durch das vom Elastomerkörper entkoppelte Dichtelement zu führen und dieses bspw. mit einer Spannschelle anzudrücken, vgl. die Ausführungsbeispiele gemäß den Fig. 1-3 zur Illustration. Auch im Falle des Ausführungsbeispiels gemäß Fig. 4 ist das nachträgliche Verlegen eines Kabels deutlich vereinfacht, muss dieses nämlich lediglich durch das tüllenförmige Dichtteil geschoben werden.

Im Vergleich zu einer Pressdichtung, bei welcher die Innenumfangsfläche des Elastomerkörpers zum Dichten gegen die Leitung genutzt wird, kann die vorliegende Entkopplung ferner bspw. auch dahingehend vorteilhaft sein, dass die Leitung auch schräg durch bzw. an die Öffnung geführt werden kann. Z.B. ein hülsenförmiges Dichtelement kann relativ zur Mittenachse der Elastomerkörper-Durchgangsöffnung ein Stück weit verkippt werden, sodass bspw. auch eine aufgrund beengter Raumverhältnisse bzw. minimal möglicher Biegeradien verkippt an die Öffnung heran geführte Leitung gedichtet werden kann. Die Innenumfangsfläche des Elastomerkörpers würde hingegen eine vordefinierte, in der Regel achsparallele Leitungsführung zwingend vorgeben. Schließlich kann das entkoppelte Dichtelement auch insoweit vorteilhaft sein, als eine gewisse Flexibilität hinsichtlich der möglichen Leitungsaußendurchmesser besteht, nämlich bspw. eine Hülse als Dichtelement mit der Spannschelle an Leitungen unterschiedlicher Außendurchmesser angedrückt werden kann.

Die Entkopplung von Elastomerkörper und Dichtelement kommt dahingehend zum Ausdruck, dass letzteres "radial leichter verformbar" als der verspannte Elastomerkörper ist. Dies meint bspw., dass unter Einwirkung eines gleichgroßen, radial wirkenden Drucks eine Innenwandfläche des Dichtelements stärker verformt wird als die Innenumfangsfläche des verspannten Elastomerkörpers, bspw. um mindestens das 1,5-, 2,5- bzw. 5-fache (mit möglichen Obergrenzen bei z. B. höchstens dem 100-, 50-, bzw. 25-fachen). Der Druck resultiert aus einer nach radial außen wirkenden Kraft und bewirkt eine Weitung der Innenwandfläche des Dichtelements, die mit der Weitung der Innenumfangsfläche verglichen wird (wobei ein etwaiges außenseitig auf dem Dichtelement angeordnetes Spannelement und die davon auferlegte Beschränkung der Aufweitung des Dichtelements außer Betracht bleibt).

Die Entkopplung von Elastomerkörper und Dichtelement kann auch dahingehend zum Ausdruck kommen, dass eine der Mittenachse der Elastomerkörper-Durchgangsöffnung abgewandte Außenwandfläche des Dichtelements auch bei verspanntem Elastomerkörper zugänglich ist, sodass dort bspw. ein vom Elastomerkörper unabhängig betätigbares Spannelement angeordnet sein kann, siehe unten im Detail. In anderen Worten liegt die Außenwandfläche des Dichtelements auch bei verspanntem Elastomerkörper nach radial außen zumindest ein Stück weit frei, gegebenenfalls von einem unabhängig vom Elastomerkörper betätigbaren Spannelement abgesehen. Dies ist auch als eine alternativ zu der hauptanspruchsgemäßen Definition von "entkoppelt" offenbarte Definition der Entkopplung von Dichtelement und Elastomerkörper zu sehen.

Generell bezieht sich "radial" im Rahmen dieser Offenbarung auf zur Mittenachse der Elastomerkörper-Durchgangsöffnung senkrechte Richtungen ("Radialrichtungen"). Dabei beziehen sich ohne ausdrücklich gegenteilige Angabe auch Angaben wie "innen" und "außen" bzw. "Innen-" und "Außen"- auf die Radialrichtungen und meint bspw. "innerhalb" der Mittenachse radial näher und "außerhalb" davon weiter entfernt. Im Allgemeinen muss die Bezugnahme auf "radial" bzw. auch einen "Durchmesser" nicht zwingend eine Kreisform implizieren; so ist bspw. der Durchmesser als Mittelwert aus kleinster und größter Erstreckung in einer zur Mittenachse senkrechten Ebene zu lesen, was bei der bevorzugten Kreisform dem Kreisdurchmesser entspricht (ein "Radius" ergibt sich als halber Durchmesser, bevorzugt als halber Kreisdurchmesser). "Axial" bezieht sich auf zur Mittenachse der Elastomerkörper-Durchgangsöffnung parallele Richtungen.

Die Mittenachse der Elastomerkörper-Durchgangsöffnung ist für den Elastomerkörper bzw. zumindest Elemente davon bevorzugt eine Symmetrieachse. Die Symmetrie ist bevorzugt eine Drehsymmetrie, besonders bevorzugt eine Rotationssymmetrie. Die Symmetriebedingung kann bspw. von der Innenumfangsfläche und/oder der Außenumfangsfläche des Elastomerkörpers erfüllt werden, bevorzugt betrifft sie den Elastomerkörper im Gesamten, jedenfalls von Durchgangsöffnungen im Elastomerkörper für die Spannbolzen abgesehen. Generell ist als Teil der Spanneinrichtung bevorzugt ein Spannbolzen vorgesehen, der den Elastomerkörper axial durchsetzt. Durch Anziehen des Spannbolzens wird der Elastomerkörper axial gestaucht, wobei das "Anziehen des Spannbolzens" ein Drehen des Spannbolzens selbst oder einer auf dem Spannbolzen geführten Mutter sein kann. Bei verspanntem Elastomerkörper (Spannzustand) ist der Spannbolzen mit einem Drehmoment von mindestens 3 Nm angezogen. Insbesondere kann der bzw. können die Spannbolzen jeweils mit einem Drehmoment von bspw. mindestens 4 Nm, 5 Nm, 8 Nm bzw. 10 Nm angezogen sein; mögliche Obergrenzen können (davon unabhängig) bspw. bei höchstens 100 Nm, 80 Nm bzw. 60 Nm liegen.

Weiterhin weist die Spanneinrichtung bevorzugt an beiden einander axial entgegengesetzten Stirnseiten des Elastomerkörpers jeweils einen Presskörper auf, wobei die Presskörper über den Spannbolzen dahingehend wirkverbunden sind, dass sie durch Anziehen des Spannbolzens axial aufeinander zubewegt werden können (um den Elastomerkörper axial zu stauchen). Im Allgemeinen wäre indes anstelle eines stirnseitig angeordneten Presskörpers bspw. auch ein in den Elastomerkörper eingeformtes Innengewinde, bspw. von einer als Einlegeteil umspritzen Mutter gebildet, möglich. Bevorzugt sind indes stirnseitig angeordnete Presskörper, die bspw. jeweils plattenförmig ausgebildet sein können, etwa als Metallplatten, oder auch eine komplexere Struktur mit Verstärkungsrippen haben können, was insbesondere bei spritzgegossenen Hartkunststoff Presskörpern bevorzugt sein kann.

Die Öffnung ist bevorzugt eine Durchgangsöffnung in einem Wand- oder Bodenelement. Sie kann von dem Wand- oder Bodenelement selbst radial begrenzt werden oder auch, jedenfalls abschnittsweise, von einem an das Wand- oder Bodenelement angesetzten Rahmen bzw. einem in das Wand- oder Bodenelement eingesetzten Mantelrohr bzw. darin vergossenen Futterrohr. All diese Teile können also jeweils für sich oder auch in Kombination miteinander die Laibung bilden, gegen welche der Elastomerkörper radial angepresst wird. Ein Wandelement kann im Allgemeinen bspw. auch eine Schott- bzw. Schiffswand sein, bevorzugt handelt es sich um eine Gebäudewand, insbesondere eine Gebäudeaußenwand. Das Wandelement kann im Allgemeinen auch aufgemauert sein, bevorzugt ist ein gegossenes Wand- oder Bodenelement, besonders bevorzugt aus Beton.

Weitere bevorzugte Ausführungsformen finden sich in den abhängigen Ansprüchen und auch der nachstehenden Beschreibung, wobei in der Darstellung der

Merkmale weiterhin nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Soweit also bspw. eine bestimmte Eignung des Pressdichtungssystems beschrieben wird (z. B. "dichtend anpressbar"), ist dies immer auch als Offenbarung einer entsprechenden Verwendung der Vorrichtung zu lesen (bei der also bspw. "dichtend angepresst wird"). Umgekehrt ist auch die Beschreibung einer bestimmten Verwendung als Offenbarung einer entsprechenden Eignung zu lesen.

Bevorzugt kann ein Pressdichtungssystem sein, bei welchem eine der Mittenachse der Elastomerkörper-Durchgangsöffnung zugewandte Innenwandfläche des Dichtelements zumindest in einem zum Andrücken gegen die Leitung vorgesehenen Axialabschnitt relativ zu der Innenumfangsfläche des Elastomerkörpers nach radial innen versetzt ist, jedenfalls bei unverspanntem, bevorzugt auch bei verspanntem Elastomerkörper. Auch die Innenwandfläche des Dichtelements wird hierbei in einem noch nicht gegen die Leitung angedrückten Zustand betrachtet. In dem Axialabschnitt kann das Dichtelement bspw. einen Innendurchmesser haben, der bspw. höchstens 90 %, 80 %, 70 %, 60 % bzw. 50 % (in der Reihenfolge der Nennung zunehmend bevorzugt) eines Innendurchmessers des Elastomerkörpers im Bereich der Innenumfangsfläche ausmacht, wobei mögliche Untergrenzen (davon unabhängig) bspw. bei mindestens 5 %, 10 % bzw. 15 % liegen können. Ein entsprechender Versatz bzw. Durchmesserunterschied zwischen der Innenwandfläche des Dichtelements und dem Elastomerkörper kann bspw. insoweit vorteilhaft sein, als das Dichtelement dann einerseits gut dichtend an die Leitung angedrückt werden kann, andererseits aber innerhalb des Elastomerkörpers großflächig Raum für die Leitung zur Verfügung steht, diese also insbesondere auch zur Mittenachse verkippt geführt werden kann.

Bevorzugt ist eine Anordnung derart, dass auch eine der Elastomerkörper-Durchgangsöffnung abgewandte Außenwandfläche des Dichtelements zumindest in dem Axialabschnitt relativ zu der Innenumfangsfläche des Elastomerkörpers nach radial innen versetzt ist, jedenfalls bei unverspanntem Elastomerkörper und nicht gegen die Leitung angedrücktem Dichtelement, also im Ausgangszustand. In dem Axialabschnitt kann das Dichtelement bspw. einen Außendurchmesser haben, der höchstens 95 %, 85 %, 75 %, 65 % bzw. 55 % des Innendurchmessers des Elastomerkörpers im Bereich der Innenumfangsfläche ausmacht, wobei mögliche Untergrenzen (davon unabhängig) bspw. bei mindestens 10 %, 15 % bzw. 20 % liegen können. Im Falle eines variierenden Durchmessers wird bei dem Dichtelement ein über den Axialabschnitt gemittelter Durchmesser betrachtet, beim Elastomerkörper ein über die Innenumfangsfläche gemittelter Durchmesser (dies gilt auch für den Durchmesser-Vergleich des vorherigen Absatzes).

Generell wird im Rahmen der vorliegenden Offenbarung mit "Axialabschnitt" der zum Andrücken gegen die Leitung bzw. der dann gegen die Leitung angedrückte axiale Abschnitt des Dichtelements bezeichnet. Die für das Dichtelement als bevorzugt angegebenen geometrischen Details sollen dann jedenfalls dafür gelten, können aber auch darüber hinaus erfüllt sein, bspw. im Falle einer im Wesentlichen zylindrischen Hülse, vgl. Figur 1-3 zur Illustration. Im Axialabschnitt kann die Wand des Dichtelement bspw. eine radial genommene Dicke von mindestens 1 mm, 2 mm bzw. 3 mm haben, wobei mögliche Obergrenzen (davon unabhängig) bei höchstens 10 mm bzw. 5 mm liegen (jeweils in der Reihenfolge der Nennung zunehmend bevorzugt). In dem Axialabschnitt kann das Dichtelement bspw. eine Shore-Härte (Shore A) von höchstens 80 Shore, 75 Shore bzw. 70 Shore und (davon unabhängig) bspw. mindestens 20 Shore, 25 Shore, 30 Shore, 35 Shore bzw. 40 Shore haben.

Bei einer bevorzugten Ausführungsform ist zumindest der Axialabschnitt des Dichtelements relativ zu dem Elastomerkörper axial versetzt, also axial überlappfrei. Bevorzugt kann das Dichtelement im Gesamten mit dem Elastomerkörper axial überlappfrei sein (vgl. bspw. Fig. 2 zur Illustration), die beiden können auch axial zueinander beabstandet sein (vgl. Fig. 3 zur Illustration). Jedenfalls der Axialabschnitt des Dichtelements ist dann also axial außerhalb der Elastomerkörper-Durchgangsöffnung angeordnet, bevorzugt gilt dies für das Dichtelement im Gesamten (im Allgemeinen wäre hingegen bspw. auch ein in die Elastomerkörper-Durchgangsöffnung hinein gestülptes Dichtelement denkbar). Generell kann diese Ausgestaltung bspw. dahingehend vorteilhaft sein, dass die Außenwandfläche des Dichtelements dann gut zugänglich ist, was bspw. das Betätigen eines dort angeordneten Spannelements vereinfacht.

Auch wenn ein axialer Versatz zwischen Axialabschnitt und Elastomerkörper bevorzugt sein kann, soll andererseits der axiale Abstand dazwischen idealerweise auch nicht zu groß werden. Ganz allgemein können Obergrenzen von bspw. höchstens 300 mm, 250 mm, 200 mm, 150 mm bzw. 100 mm vorteilhaft sein (in der Reihenfolge der Nennung zunehmend bevorzugt). Bei einem axialen Versatz können mögliche Untergrenzen bspw. bei mindestens 20 mm, 30 mm, 40 mm bzw. 50 mm liegen, wobei der Abstand aber andererseits auch gleich Null sein kann, wenn es eben keinen axialen Versatz gibt (die eben genannten Obergrenzen sollen ausdrücklich auch unabhängig von Vorliegen eines axialen Versatzes offenbart sein). Der Abstand wird als kleinster axialer Abstand zwischen Elastomerkörper und Axialabschnitt genommen. Generell wird in diesem Zusammenhang, auch den im vorherigen Absatz diskutierten Versatz betreffend, der Elastomerkörper mit einer axialen Erstreckung zugrundegelegt, die sich nach der axialen Erstreckung seiner an die Laibung anpressbaren bzw. angepressten Außenumfangsfläche bemisst (diese Festlegung kann bspw. auch im Falle eines monolithisch mit dem Elastomerkörper ausgebildeten Dichtelements bestimmen helfen, wie weit der Elastomerkörper reicht, vgl. Fig. 1 zur Illustration).

Bei einer bevorzugten Ausführungsform hat das Dichtelement zumindest abschnittsweise einen abnehmenden Innendurchmesser. Dieses "abschnittsweise" bezieht sich bevorzugt auf einen axialen Abschnitt des Dichtelements, der von dem zum Andrücken gegen die Leitung vorgesehenen Axialabschnitt verschieden ist, in letzterem ist der Innendurchmesser bevorzugt konstant. Im Falle des zum Elastomerkörper axial versetzten Axialabschnitts nimmt der Innendurchmesser des Dichtelements vorzugsweise in der Richtung vom Elastomerkörper axial weg ab, jedenfalls bis zum Axialabschnitt.

Bei einer bevorzugten Ausführungsform ist in der Elastomerkörper-Durchgangsöffnung ein Stützrohr angeordnet, gegen welches der gespannte Elastomerkörper, also der Elastomerkörper im Spannzustand, nach radial innen (zur Mittenachse hin) angepresst wird. Generell meint im Rahmen dieser Offenbarung ein Anpressen "gegen" ein bestimmtes Teil, das in Richtung zu diesem Teil hin angepresst wird; im Allgemeinen muss dies nicht zwingend eine Anlage implizieren, sondern kann auch ein weiteres Element dazwischen angeordnet sein, wenngleich die gegeneinander angepressten Teile bevorzugt auch direkt aneinander anliegen. Im Falle des Stützrohrs könnte also bspw. auch noch eine Hülse zwischen dem Elastomerkörper und dem Stützrohr angeordnet sein (vgl. auch das nachstehend beschriebene Befestigungskonzept "Hülse zwischen Stützrohr und Elastomerkörper"), bevorzugt liegen Stützrohr und Elastomerkörper jedoch direkt aneinander an, legt sich der Elastomerkörper also mit seiner Innenumfangsfläche an eine Außenwandfläche des Stützrohrs an. Unabhängig davon im Einzelnen ist das Stützrohr ein Leerrohr, begrenzt seine der Außenwandfläche radial entgegengesetzte Innenwandfläche also eine Durchgangsöffnung ("Stützrohr-Durchgangsöffnung"), in die eine Leitung ein- oder hindurchgeführt werden kann bzw. wird.

Es kann bspw. ein Stützrohr vorgesehen sein, das sich für sich im Gesamten innerhalb des Elastomerkörpers angeordnet ist, axial also nicht daraus hervorsteht. Andererseits kann das Stützrohr aber auch zu einer Seite hin, bevorzugt zu genau einer Seite, aus dem Elastomerkörper hervortreten. Als Stützrohr kann nämlich insbesondere auch ein sogenanntes Schutzrohr genutzt werden, das bspw. erdreichseitig in einem Graben verlegt und mit Erdreich bedeckt werden kann (was ausdrücklich auch bzgl. entsprechender Verwendungen zu lesen ist). Unabhängig davon im Einzelnen ist bzw. wird die Leitung in dem Schutzrohr geführt und ist sie so geschützt. Die Entkopplung von Elastomerkörper und Dichtelement kann bspw. insoweit vorteilhaft sein, als zunächst das Schutzrohr in den Elastomerkörper eingeschoben und durch Verspannen des Elastomerkörpers befestigt werden kann (es ist dann an dem Pressdichtungssystem befestigt und dient zugleich als Stützrohr); wird dann später die Leitung durch das Schutzrohr und das Pressdichtungssystem geführt, kann mit dem Dichtelement gegen die Leitung gedichtet werden, ohne Eingriff in die Befestigung des Schutzrohres.

Generell kann die Leitung, wie bereits erwähnt, in bevorzugter Ausgestaltung ein Kabel sein, etwa zur Signal- bzw. Datenübertragung, bevorzugt ist ein Elektrokabel. Hierbei können die eingangs geschilderten Vorteile ("in mechanischer Hinsicht vereinfachte Installation für den Elektroinstallateur" und "gekrümmt und damit schräg an die Öffnung herangeführte Leitung") im Besonderem zum Tragen kommen. Die Leitung kann aber auch ein Leerrohr (Schutzrohr) sein, in dem dann die eigentliche Leitung, insbesondere ein Kabel, geführt wird. Ganz allgemein kann die "Leitung" ein medienführendes Rohr, bspw. für Gas, Wasser bzw. Fernwärme sein, oder eben auch ein Kabel (Signal/Daten bzw. Elektro).

Wie bereits erwähnt, ist in bevorzugter Ausgestaltung außenseitig an dem Dichtelement ein Spannelement zum Andrücken des Dichtelements gegen die Leitung angeordnet (vgl. auch die vorstehenden Anmerkungen zu "andrücken gegen"). Als Spannelement kann bspw. ein Spannband vorgesehen sein, dessen Innendurchmesser sich bspw. mit einem Schnellverschluss (insbesondere Schnappverschluss) verringern lassen kann. Bevorzugt ist eine Spannschelle vorgesehen, deren Innendurchmesser durch Drehen einer Schraube verringert werden kann. Unabhängig davon im Einzelnen kann im Vergleich zur Installation der Pressdichtung selbst (Spannen der Spannbolzen etc.) der Montageaufwand beim Hindurchführen der Leitung deutlich geringer und vereinfacht sein.

Das Spannelement ist an einer der Mittenachse der Elastomerkörper-Durchgangsöffnung abgewandten Außenwandfläche des Dichtelements angeordnet (in dem Axialabschnitt). Bevorzugt liegt das Spannelement direkt an der Außenwandfläche des Dichtelements an. Jedenfalls dort, wo das Spannelement angeordnet ist, hat das Dichtelement (noch nicht angedrückt, also im Ausgangszustand) bevorzugt einen konstanten Außendurchmesser. Auch unabhängig davon kann bevorzugt sein, dass das Spannelement an der Außenwandfläche des Dichtelements axial eingefasst sitzt, also von dem Dichtelement axial in Position gehalten wird; das Spannelement kann bspw. in einer umlaufenden Vertiefung oder zwischen radial hervortretenden Vorsprüngen gehalten sein.

Bei einer bevorzugten Ausführungsform sind der Elastomerkörper und das Dichtelement mehrteilig zueinander ausgebildet. In dem Pressdichtungssystem sind sie dann gleichwohl gegeneinander gedichtet. In einem einfachen Fall könnte das Dichtelement bspw. axial durchgehend hülsenförmig ausgebildet sein und, für eine Befestigung relativ zum Elastomerkörper, mit einem Befestigungsabschnitt radial zwischen Stützrohr und Elastomerkörper angeordnet sitzen. Die Hülse erstreckt sich dann axial aus dem Elastomerkörper heraus in einem dem Elastomerkörper distalen Abschnitt davon ist dann der Axialabschnitt angeordnet.

Im Allgemeinen kann das Dichtelement sogar auch derart vorgesehen sein, dass es mit einem Befestigungsabschnitt an der Außenumfangsfläche des Elastomerkörpers anliegt, dann also mit dem Verspannen des Elastomerkörpers zwischen diesem und der die Öffnung begrenzenden Laibung eingeklemmt wird. Zu dem zum Andrücken an die Leitung vorgesehenen Axialabschnitt hin kann dieses Dichtelement dann trichterförmig zulaufen; in dieser Ausgestaltung verdeckt das Dichtelement den Elastomerkörper und die Spanneinrichtung dann zu einer Seite hin, was bspw. auch einen gewissen Schutz bieten kann. Es kann aber auch vorteilhaft sein, wenn die Spanneinrichtung auch bei installiertem Dichtelement zu jener Seite, von welcher her bspw. die Spannbolzen angezogen werden, frei liegt, bspw. weil so eine Überprüfung des Anzugsmoments (Drehmoment) ohne Eingriff in die Dichtung zur Leitung hin möglich bleibt.

In bevorzugter Ausgestaltung ist das Dichtelement derart an dem Elastomerkörper befestigt, dass es auch dann von diesem demontiert werden kann, wenn er sich im Spannzustand befindet. Am Elastomerkörper "befestigt" meint zumindest bereichsweise relativ dazu lagefixiert, also jedenfalls mittelbar dazu festgelegt (das am Elastomerkörper befestigte Dichtelement muss nicht zwingend daran anliegen). Diese Ausgestaltung kann bspw. insoweit vorteilhaft sein, als so ohne Eingriff in die Abdichtung des Elastomerkörpers zur Laibung hin ein Austausch des Dichtelements gegen ein anderes Dichtelement möglich ist. Das Dichtelement kann bspw. nach einer bestimmten Einsatzdauer ausgetauscht werden, etwa um trotz einer Materialdegradation einem bestimmten Anforderungsprofil zu genügen. Ein Austausch kann bspw. auch von Interesse sein, wenn sich die Zahl der hindurchzuführenden Leitungen ändert, also nachträglich noch eine weitere Leitung hindurchgeführt werden muss. Ganz allgemein kann ein Dichtelement nämlich auch eine Mehrzahl Durchlassöffnungen für eine entsprechende Mehrzahl an Leitungen bilden, siehe unten im Detail.

In bevorzugter Ausgestaltung ist das auch im verspannten Zustand des Elastomerkörpers demontierbare Dichtelement an einem stirnseitig am Elastomerkörper angeordneten Presskörper lösbar befestigt (es wird auf die oben stehenden Angaben zu "Spanneinrichtung" und "Presskörper" verwiesen). Bevorzugt ist ein an dem Presskörper festgeschraubtes Dichtelement. Ein Befestigungsabschnitt des Dichtelements kann bspw. zwischen dem Presskörper und einem gegen diesen mittels einer Schraube bzw. Schrauben axial angepressten Befestigungskörper eingeklemmt werden. Eine Befestigungsplatte als Befestigungskörper kann bspw. aus Metall vorgesehen sein, es ist aber bspw. auch ein Befestigungskörper mit Versteifungsrippen möglich (vgl. auch die Anmerkungen eingangs zum "Presskörper"), der dann bevorzugt aus Kunststoff vorgesehen ist, besonders bevorzugt als Spritzgußteil (auch eine Kunststoffplatte ist möglich).

Bei einer bevorzugten Ausführungsform weist das Dichtelement einen sich gewinkelt, vorzugsweise im Wesentlichen senkrecht zu der Mittenachse erstreckenden Abschnitt auf, der zur Befestigung des Dichtelements axial gegen eine Stirnseite des Elastomerkörpers angedrückt wird (vgl. die vorstehenden Anmerkungen zum "Andrücken gegen"). Dieser Abschnitt kann an der Stirnseite des Elastomerkörpers anliegen, es kann aber bspw. auch der Presskörper dazwischen angeordnet sein. Der sich "gewinkelt" zur Mittenachse erstreckende Abschnitt kann sich relativ dazu bspw. in einem Winkelbereich zwischen 60° und 120°, bevorzugt zwischen 70° und 110°, weiter und besonders bevorzugt zwischen 80° und 100° bzw. zwischen 85° und 95°, erstrecken (Ober- und Untergrenze zählen jeweils zum Winkelbereich dazu). Besonders bevorzugt kann ein sich im Rahmen technisch üblicher Genauigkeit senkrecht (unter 90°) zur Mittenachse erstreckender Abschnitt sein.

Auch unabhängig davon im Einzelnen sind der sich zur Mittenachse gewinkelt erstreckende Abschnitt und der gegen die Leitung dichtende Abschnitt (Axialabschnitt) des Dichtelements bevorzugt zueinander axial versetzt (siehe auch vorne). Axial dazwischen kann ein hülsen- bzw. trichterförmiger Abschnitt vorgesehen sein. Der zur Befestigung an der Stirnseite des Elastomerkörpers vorgesehene Abschnitt bildet gewissermaßen einen Flansch, der sich von dem übrigen Dichtelement nach außen erstreckt.

Bei einer bevorzugten Ausführungsform ist das Dichtelement aus mehreren Komponenten aufgebaut, weist es nämlich ein Formteil und ein demgegenüber weicheres Dichtteil auf. Bevorzugt können das Form- und das Dichtteil jeweils aus Kunststoff vorgesehen sein, wobei für das Formteil ein Hartkunststoff bevorzugt ist, bspw. Acryl-Butadien-Styrol (ABS), und für das Dichtteil ein Elastomer, bspw. ein thermoplastischer Elastomer. Bevorzugt können das Form- und das Dichtteil als Mehrkomponenten-Formteil direkt aneinander angeformt sein, besonders bevorzugt kann es sich um ein Mehrkomponenten-Spritzgussteil handeln. Das Dichtteil kann bspw. insoweit aus einem "weicheren Material" vorgesehen sein, als dieses eine um bspw. mindestens 20 %, 40 % bzw. 60 % geringere Shore-Härte als das Material des Formteils haben kann, wobei mögliche Obergrenzen (davon unabhängig) bspw. bei höchstens 95 %, 90 %, 85 % bzw. 80 % liegen können. Das Dichtteil kann bspw. eine Shore-Härte (A) von höchstens 80 Shore, 75 Shore bzw. 70 Shore und (davon unabhängig) bspw. mindestens 20 Shore, 25 Shore, 30 Shore, 35 Shore bzw. 40 Shore haben. Das Formteil kann bspw. eine Shore-Härte (D) von mindestens 50 Shore, 60 Shore bzw. 70 Shore haben, mit möglichen Obergrenzen bei höchstens 85 Shore bzw. 80 Shore.

Die Ausgestaltung als Zwei-Komponenten-Spritzgussteil ist jedoch nicht zwingend, das Dichtteil kann zu dem Formteil auch mehrteilig sein, etwa als in die Durchlassöffnung in dem Formteil reversibel einsetz- und herausnehmbares Gummiteil vorgesehen sein (auch als "Stopfen" bezeichnet). Ein zu dem Formteil mehrteiliger Stopfen kann als Blindverschluss ausgebildet sein und die Durchlassöffnung zunächst verschließen. Mit dem Hindurchführen der Leitung kann dann bspw. eine Membran des Stopfens durchstoßen werden; es kann aber andererseits auch der Blindverschluss-Stopfen gegen einen Stopfen mit einer Durchgangsöffnung für die Leitung ausgetauscht werden. Zum Dichten gegen die Leitung kann der Stopfen mit Durchgangsöffnung bspw. eine Dichtlippe aufweisen.

Unabhängig davon im Einzelnen kann der Stopfen z. B. formschlüssig in der Durchlassöffnung (im Formteil) gehalten sein und dazu bspw. außenseitig eine umlaufende Nut aufweisen, in welche dann das Formteil mit einem die Durchlassöffnung begrenzenden Abschnitt eingreift. Zum Einsetzen kann der Stopfen zusammengedrückt und in die Durchlassöffnung geschoben werden, um sich dann zu weiten und formschlüssig gehalten zu sein. Das zu dem Stopfen (dem Dichtteil) mehrteilige Formteil kann aus Kunststoff, insbesondere aus einem Hart-Kunststoff, aber bspw. auch aus Metall vorgesehen sein. Das Formteil kann insbesondere auch eine Presskörperfunktion übernehmen, also die Anpresskraft beim Spannen auf den Elastomerkörper übertragen (siehe unten); das Formteil kann also bspw. eine Platte sein, die einerseits als Presskörper dient, sich aber anderseits weiter nach radial innen erstreckt und die Elastomerkörper-Durchgangsöffnung bedeckt, von der bzw. den Durchlassöffnungen zum Einsetzen des oder der Stopfen abgesehen.

Die folgenden Ausgestaltungen können ohne ausdrücklich gegenteilige Angabe unabhängig davon von Interesse sein, ob das Form- und das Dichtteil einstückig miteinander (insbesondere als Zwei-Komponenten-Spritzgussteil ausgebildet) oder mehrteilig vorgesehen sind. In axialer Richtung betrachtet verdeckt das Formteil die Elastomerkörper-Durchgangsöffnung zumindest teilweise, wobei es im Allgemeinen auch seinerseits vollständig von dem Dichtteil verdeckt werden kann, bevorzugt liegt es zumindest teilweise axial frei. Dabei definiert das Formteil eine Durchlassöffnung für die Leitung, die im Allgemeinen auch noch mit einem Blindverschluss verschlossen sein kann (monolithisch aus demselben Material wie das übrige Formteil gebildet). Bevorzugt ist jedoch, soweit allein das Formteil betrachtet wird, darin eine bereits im Ausgangszustand geöffnete Durchlassöffnung vorgesehen. Unabhängig davon im Einzelnen ist das Dichtteil dann an dieser Durchlassöffnung vorgesehen, sodass es also gegen eine durch die Durchlassöffnung hindurchgeführte Leitung angedrückt werden kann.

Bevorzugt hat das Dichtteil einen von dem Formteil weg abnehmenden Innendurchmesser (Tüllenform), besonders bevorzugt derart, dass es sich beim Hindurchschieben einer Leitung dann von selbst an diese anlegt. An einem dem Formteil abgewandten Ende kann das Dichtteil bevorzugt geschlossen ausgebildet sein, wobei dieses Ende dann vor dem Hindurchführen der Leitung geöffnet werden kann (bspw. abgezwickt) oder vorzugsweise von der Leitung selbst beim Hindurchschieben aufgerissen wird. Vor dem Hindurchführen der Leitung erfüllt das geschlossene Ende vorteilhafterweise eine Blindverschlussfunktion. Ein solches Dichtteil mit Blindverschlussfunktion kann ganz allgemein bevorzugt sein, auch unabhängig von dem vom Formteil weg abnehmenden Innendurchmesser. Bevorzugt kann ein sich im Wesentlichen radial erstreckendes Formteil sein, das dann also scheiben- bzw. plattenförmig derart relativ zur Mittenachse (der Elastomerkörper-Durchgangsöffnung) liegt, dass diese parallel zu seiner Dickenrichtung liegt. In der Dickenrichtung hat das scheiben- bzw. plattenförmige Formteil seine kleinste Erstreckung, seine Flächenrichtungen liegen senkrecht dazu.

Da das Formteil aus einem im Verhältnis härteren Material vorgesehen ist, kann es bevorzugt auch beim Spannen des Spannbolzens eine Anpresskraft auf den Elastomerkörper übertragen. Bevorzugt ist dann an der Stirnseite des Elastomerkörpers, an der das Formteil angeordnet ist, kein zusätzlicher Presskörper vorgesehen; in anderen Worten wirkt das Anziehen des Spannbolzens direkt auf das Formteil und überträgt dieses die Anpresskraft flächig auf den Elastomerkörper. Eine auf dem Spannbolzen geführte und zum Spannen gedrehte Mutter kann bspw. direkt auf das Formteil wirken, ggf. von einer Unterlegscheibe dazwischen abgesehen. Auch unabhängig davon können in dem Formteil bevorzugt eine Mehrzahl Durchlassöffnungen vorgesehen sein, also mindestens zwei, weiter und besonders bevorzugt mindestens drei bzw. vier Öffnungen; davon unabhängige Obergrenzen können bspw. bei höchstens 20, 15 bzw. 10 Öffnungen liegen. Es ist dann jeder der Öffnungen ein Dichtteil zugeordnet und wird insoweit auf die vorstehenden Anmerkungen verwiesen.

Generell, auch unabhängig von der Ausgestaltung mit Form- und Dichtteil, kann das Dichtelement zum Hindurchführen einer Mehrzahl Leitungen ausgelegt sein (bezüglich einer Quantifizierung der "Mehrzahl" wird auf die im Absatz zuvor offenbarten Werte verweisen). Das Dichtelement kann also bspw. eine der Anzahl an Leitungen entsprechende Anzahl an axial hervortretenden Stutzen aufweisen, wobei dann durch jeden der Stutzen eine Leitung geführt werden kann; außenseitig an den Stutzen kann dann jeweils ein Spannelement angeordnet sein, vergleiche die vorstehende Offenbarung dazu (Spannband bzw. Spannschelle etc.). Mit einem den Stutzen axial entgegengesetzten Abschnitt kann dieses Dichtelement dann an dem Elastomerkörper befestigt sein. Andererseits kann aber auch ein zum Hindurchführen genau einer Leitung ausgelegtes Dichtelement bevorzugt sein.

Bei einer Alternative zu der mehrteiligen Ausgestaltung von Elastomerkörper und Dichtelement sind die beiden einstückig miteinander vorgesehen, vorzugsweise monolithisch miteinander. "Einstückig" meint generell im Rahmen dieser Offenbarung nicht zerstörungsfrei voneinander trennbar. "Monolithisch" meint, im Inneren frei von Materialgrenzen zwischen unterschiedlichen Materialien bzw. Materialien unterschiedlicher Herstellungsgeschichte. Im Falle der monolithischen Ausgestaltung soll also zwischen dem Elastomerkörper und dem Dichtelement keine solche Materialgrenze verlaufen, die beiden können bspw. in einem Gussverfahren im selben Schritt aus dem selben Material gebildet sein, etwa als Ein-Komponenten-Spritzgußteil. Die einstückige/monolithische Ausgestaltung kann bspw. dahingehend vorteilhaft sein, dass die beiden montageunabhängig ab initio zueinander gedichtet sind, was Montagefehlern vorbeugen helfen kann.

Generell, auch unabhängig von der mit dem Dichtelement einstückigen/monolithischen Ausgestaltung, ist der Elastomerkörper bevorzugt für sich betrachtet monolithisch. Soweit er also im Allgemeinen z. B. auch aus mehreren zuvor jeweils für sich hergestellten Elastomerkörperteilen zusammengesetzt sein kann, ist er bevorzugt ein integrales, in seiner Form im Gesamten hergestelltes Teil. Im Allgemeinen kann er mit einer Trennfuge versehen und so etwa an seiner Außenumfangsfläche mit einer zur Anpassung an unterschiedliche Laibungsdurchmesser abnehmbaren Schale gefasst sein, unabhängig von oder auch in Verbindung mit einer insgesamt monolithischen Ausgestaltung (die Schale und der übrige Elastomerkörper können trotz Trennfuge über eine Materialbrücke monolithisch zusammenhängen). Bevorzugt ist er zwischen seiner Innenumfangsfläche und der Außenumfangsfläche durchgehend ausgebildet, also von einer Durchlassöffnung bzw. -Öffnungen für Spannbolzen abgesehen unterbrechungsfrei.

Die Erfindung betrifft die Verwendung eines Pressdichtungssystems mit Elastomerkörper und Dichtelement, wobei zuerst der Elastomerkörper verspannt und radial angepresst wird, bevor anschließend das Dichtelement gegen die Leitung gedichtet, angedrückt wird. Beim Dichten des Dichtelements gegen die Leitung ist der Elastomerkörper bereits fertig verspannt. Dazwischen kann eine Zeitdauer von Minuten (bspw. mindestens 1 min., 5 min. bzw. 10 min.) Stunden (bspw. mindestens 2 h, 4 h bzw. 6 h) oder aber auch einem oder mehreren Tagen (mind. 1 Tag, 2 Tage bzw. 3 Tage) liegen. Es ist auch eine Zeitdauer von Wochen bzw. Monaten möglich, wenn bspw. die Elektroinstallationen erst weit nach der Vorinstallation des Pressdichtungssystems, die bspw. noch in einer Rohbauphase erfolgen kann, vorgenommen werden. Ein bevorzugt vorgesehenes Stützrohr ist beim Verspannen des Elastomerkörpers aber bereits in der Elastomerkörper-Durchgangsöffnung angeordnet, die Innenumfangsfläche wird dann also beim Verspannen nach radial innen gegen das Stützrohr angedrückt.

In bevorzugter Ausgestaltung wird die Leitung erst durch die Elastomerkörper-Durchgangsöffnung hindurchgeführt, wenn der Elastomerkörper bereits verspannt ist. Es wird ausdrücklich auf die im vorherigen Absatz offenbarten Zeitdauern verwiesen, die auch zwischen dem Verspannen des Elastomerkörpers und dem Hindurchführen der Leitung liegen können.

Bei einer bevorzugten Ausführungsform wird das Dichtelement gegen ein anderes ausgetauscht, bevorzugt bei verspanntem Elastomerkörper; es wird ausdrücklich auch auf die vorstehenden Anmerkungen verwiesen.

### Kurze Beschreibung der Zeichnungen

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein erstes Pressdichtungssystem mit Elastomerkörper und Dichtelement in einem schematischen Schnitt;
- Figur 2: ein zweites Pressdichtungssystem mit Elastomerkörper und Dichtelement in einem schematischen Schnitt;
- Figur 3: ein drittes Pressdichtungssystem mit Elastomerkörper und Dichtelement in einem schematischen Schnitt;
- Figur 4: ein viertes Pressdichtungssystem mit Elastomerkörper und Dichtelement in einem schematischen Schnitt.

### Bevorzugte Ausführung der Erfindung

Figur 1 zeigt in einem schematischen Schnitt ein erstes Pressdichtungssystem mit einem Elastomerkörper 1 und einem Dichtelement 2, das von der Verspannung des Elastomerkörpers 1 insoweit entkoppelt ist, als es unabhängig davon gegen eine hindurchgeführte Leitung (vorliegend nicht gezeigt) gedichtet werden kann. Mittels des Elastomerkörpers 1 wird das Pressdichtungssystem in einer Öffnung 3 der Wand 4 befestigt. Dazu wird der Elastomerkörper 1 mit einer Spanneinrichtung 5 axial, in der Richtung der Mittenachse 6 gestaucht und legt sich infolgedessen mit seiner Außenumfangsfläche 7 nach radial außen dichtend an eine die Öffnung 3 begrenzende Laibung 8 an.

Als Teil der Spanneinrichtung 5 ist an beiden axialen Stirnseiten 9a, b des Elastomerkörpers 1 jeweils ein Presskörper 5a, b angeordnet. Die Presskörper 5a,b sind über einen den Elastomerkörper 1 durchsetzenden Spannbolzen 5c dahingehend miteinander verbunden, dass sie durch Anziehen einer auf dem Spannbolzen 5c (einem Außengewinde davon) geführten Mutter 5d axial aufeinander zubewegt werden können. Durch Drehen der Mutter 5d wird der Spannbolzen 5c insoweit angezogen, als die Presskörper 5a, b aufeinander zubewegt werden, also der Elastomerkörper 1 axial gestaucht wird. Um hierbei eine Ausdehnung der Innenumfangsfläche 10 des Elastomerkörpers 1 in die Elastomerkörper-Durchgangsöffnung 11 hinein zu begrenzen, ist in dieser ein Stützrohr 12 angeordnet. Beim Spannen wird der Elastomerkörper 1 mit seiner Innenumfangsfläche 10 an eine Außenwandfläche des Stützrohrs 12 angepresst.

Der Elastomerkörper 1 und das Dichtelement 2 sind in Fig. 1 monolithisch miteinander ausgebildet, nämlich aus einem thermoplastischen Elastomer (TPE) spritzgegossen. Das Dichtelement 2 erstreckt sich von dem Elastomerkörper 1 axial weg. Ein zum Andrücken an die Leitung vorgesehener Axialabschnitt 2a des Dichtelements liegt entsprechend zum Elastomerkörper 1 axial versetzt. In dem Axialabschnitt 2a ist zum Andrücken außenseitig ein Spannelement 13 angeordnet, nämlich eine Spannschelle. Diese sitzt auf einer Außenwandfläche 14 des Dichtelements 2, durch Anziehen der Spannschelle wird das Dichtelement 2 mit seiner entgegengesetzten Innenwandfläche 15 gegen die Leitung angedrückt.

Im Folgenden werden weitere Ausführungsformen beschrieben, wobei mit den gleichen Bezugszeichen versehene Teile eine vergleichbare Ausgestaltung und Funktion haben, insoweit also implizit auch immer auf die Beschreibung der jeweilig anderen Figuren verwiesen wird. Der Übersichtlichkeit halber ist bei den folgenden Ausführungsformen das Wandelement nicht mehr gezeigt, der Elastomerkörper wird aber analog der vorstehenden Beschreibung montiert.

Bei der Ausführungsform gemäß Fig. 2 sind das Dichtelement 2 und der Elastomerkörper 1 zunächst mehrteilig zueinander, sind sie also als zuvor jeweils für sich hergestellte Teile aneinander gesetzt. Das Dichtelement 2 weist zusätzlich zu dem hülsenförmigen Abschnitt mit dem Axialabschnitt 2a einen sich radial von der Mittenachse 6 weg erstreckenden Abschnitt 2b auf, welcher der Befestigung am Elastomerkörper 1 dient. Dieser Befestigungsabschnitt 2b wird nämlich zwischen der Stirnseite 9b des Elastomerkörpers 1 und dem an dieser Stirnseite 9b angeordneten Presskörper 5b der Spanneinrichtung 5 eingeklemmt. Das Dichtelement 2 wird so gleichzeitig mit dem Verspannen des Elastomerkörpers 1 gegen diesen angedrückt und befestigt.

Bei der Ausführungsform gemäß Fig. 3 ist das Dichtelement 2 analog jenem gemäß Fig. 2 aufgebaut, weist es also insbesondere einen Befestigungsabschnitt 2b auf. Dieser ist jedoch nicht zwischen der Stirnseite 9b des Elastomerkörpers 1 und dem Presskörper 5b eingeklemmt, sondern zwischen letzterem und einem Befestigungskörper 30. Der Presskörper 5b wird mit einem (nicht gezeigten) Spannbolzen relativ zu dem entgegengesetzten Presskörper 5a verspannt, welcher einen in dem Presskörper 5b versenkten Spannbolzenkopf aufweist (von der Seite auf den Presskörper 5b blickend ist der Spannbolzenkopf dann also nicht sichtbar).

Nach dem Verspannen des Elastomerkörpers 1 wird das Dichtelement 2 an den Presskörper 5b gesetzt und mit dem Befestigungskörper 30 daran verklemmt. Der Befestigungskörper 30 wird relativ zum Presskörper 5b verschraubt und der Befestigungsabschnitt 2b des Dichtelements 2 dabei dazwischen eingeklemmt. Diese Ausführungsform kann vorteilhafterweise einen Austausch des Dichtelements 2 ermöglichen, auch wenn der Elastomerkörper 1 verspannt ist.

Bei der Ausführungsform gemäß Fig. 4 ist das Dichtelement 2 als Zwei-Komponenten-Spritzgußteil vorgesehen. Es weist ein Formteil 2c aus ABS auf, in dem mehrere Durchlassöffnungen 40 angeordnet sind. An jeder der Durchlassöffnungen 40 ist jeweils ein Dichtteil 2d in Form einer Tülle angeformt. Die Dichtteile 2d sind aus TPE spritzgegossen. An ihrem dem Formteil 2c abgewandten Enden sind die Dichtteile 2d jeweils geschlossen, mit dem Hindurchschieben eines Kabels (in der Figur von links) werden die Dichtteile 2d an diesen Enden aufgerissen und legen sich damit gleichzeitig dichtend an das Kabel an. Bei der abgebildeten Ausführungsform ist das Formteil 2c axial zwischen dem Presskörper 5b und dem Elastomerkörper 1 angeordnet; das Formteil 2c könnte jedoch auch direkt von der Mutter 5d angedrückt werden, also selbst eine Presskörperfunktion übernehmen.

### Bezugszeichen:

- 1: Elastomerkörper
- 2: Dichtelement
- 2a: Axialabschnitt
- 2b: Befestigungsabschnitt
- 2c: Formteil
- 2d: Dichtteil
- 3: Öffnung
- 4: Wand
- 5: Spanneinrichtung
- 5a, b: Presskörper
- 5c: Spannbolzen
- 5d: Mutter
- 6: Mittenachse
- 7: Außenumfangsfläche
- 9a, b: Stirnseiten
- 10: Innenumfangsfläche
- 11: Durchgangsöffnung
- 12: Stützrohr
- 13: Spannelement
- 15: Innenwandfläche
- 30: Befestigungskörper
- 40: Durchlassöffnungen

## Patentansprüche

1. Verwendung eines Pressdichtungssystems zum Einsetzen in eine Öffnung (3) und Abdichten der Öffnung (3) gegen eine Leitung, welches Pressdichtungssystem
einen Elastomerkörper (1) aufweist, der eine Durchgangsöffnung (11) freigibt, und
eine Spanneinrichtung (5) aufweist, mittels welcher der Elastomerkörper (1) verspannbar ist, und zwar bezogen auf eine Mittenachse (6) der Elastomerkörper-Durchgangsöffnung (11) axial stauchbar und infolgedessen mit einer Außenumfangsfläche (7) radial zu der Mittenachse (6) nach außen dichtend anpressbar ist,
wobei das Pressdichtungssystem ferner ein Dichtelement (2) zum Dichten gegen die an die Öffnung (3) heran- oder durch die Öffnung (3) hindurchgeführte Leitung aufweist,
welches Dichtelement (2) von der Verformung des Elastomerkörpers (1) entkoppelt ist, nämlich zumindest im verspannten Zustand des Elastomerkörpers (1) radial leichter verformbar als der Elastomerkörper (1) ist, sodass das Dichtelement (2) auch bei bereits verspanntem Elastomerkörper (1) gegen die Leitung gedichtet werden kann,
bei welcher Verwendung zuerst der Elastomerkörper (1) mittels der Spanneinrichtung (5) verspannt wird, nämlich durch Anziehen eines Spannbolzens (5c) axial gestaucht und infolgedessen mit der Außenumfangsfläche (7) radial nach außen dichtend angepresst wird, und erst danach, wenn der Elastomerkörper (1) bereits verspannt ist, also der Spannbolzen (5c) mit einem Drehmoment von mindestens 3 Nm angezogen ist, das Dichtelement (2) gegen die Leitung gedichtet wird.

2. Verwendung nach Anspruch 1, bei welcher zuerst der Elastomerkörper (1) mittels der Spanneinrichtung (5) verspannt wird und erst danach, wenn der Elastomerkörper (1) bereits verspannt ist, die Leitung durch die Elastomerkörper-Durchgangsöffnung (11) hindurchgeführt wird.

3. Verwendung nach einem der vorstehenden Ansprüche, wobei bei dem Pressdichtungssystem
eine der Mittenachse (6) der Elastomerkörper-Durchgangsöffnung (11) zugewandte Innenwandfläche (15) des Dichtelements (2) zumindest in einem zum Andrücken gegen die Leitung vorgesehenen Axialabschnitt (2a) relativ zu einer der Außenumfangsfläche (7) radial entgegengesetzten Innenumfangsfläche (10) des Elastomerkörpers nach radial innen versetzt ist.

4. Verwendung nach einem der vorstehenden Ansprüche, wobei bei dem Pressdichtungssystem
zumindest ein an die Leitung angedrückter Axialabschnitt (2a) des Dichtelements (2) relativ zu dem Elastomerkörper (1) axial versetzt ist.

5. Verwendung nach einem der vorstehenden Ansprüche, wobei bei dem Pressdichtungssystem
das Dichtelement (2) einen entlang der Mittenachse (6) der Elastomerkörper-Durchgangsöffnung (11) zumindest abschnittsweise abnehmenden Innendurchmesser hat.

6. Verwendung nach einem der vorstehenden Ansprüche, wobei bei dem Pressdichtungssystem
in der Elastomerkörper-Durchgangsöffnung (11) ein Stützrohr (12) angeordnet ist, gegen welches einerseits der Elastomerkörper (1) im verspanntem Zustand nach radial innen angepresst wird und das andererseits eine Durchgangsöffnung zum Ein- oder Hindurchführen der Leitung freigibt.

7. Verwendung nach einem der vorstehenden Ansprüche, wobei bei dem Pressdichtungssystem
in einem an die Leitung angedrückten Axialabschnitt (2a) des Dichtelements (2) außenseitig ein Spannelement (13) angeordnet ist, mit das Dichtelement (2) gegen die Leitung angedrückt wird, vorzugsweise eine Spannschelle.

8. Verwendung nach einem der vorstehenden Ansprüche, wobei bei dem Pressdichtungssystem
der Elastomerkörper (1) und das Dichtelement (2) mehrteilig zueinander ausgebildet sind.

9. Verwendung nach Anspruch 8, wobei bei dem Pressdichtungssystem
das Dichtelement (2) derart zumindest mittelbar an dem Elastomerkörper (1) befestigt ist, dass es auch bei verspanntem Elastomerkörper (1) von diesem demontierbar ist.

10. Verwendung nach Anspruch 9, wobei bei dem Pressdichtungssystem
als Teil der Spanneinrichtung (5) an einander axial entgegengesetzten Stirnseiten (9a,b) des Elastomerkörpers (1) Presskörper (5a, b) angeordnet sind, zwischen denen der Elastomerkörper (1) beim Verspannen axial gestaucht wird, wobei das Dichtelement (2) an einem der Presskörper (5a, b) lösbar befestigt ist.

11. Verwendung nach Anspruch 9 oder 10, bei welcher das Dichtelement (2) gegen ein anderes Dichtelement (2) ausgetauscht wird.

12. Verwendung nach einem der Ansprüche 8 bis 11, wobei bei dem Pressdichtungssystem,
das Dichtelement (2) einen sich gewinkelt, bevorzugt senkrecht zu der Mittenachse (6) der Elastomerkörper-Durchgangsöffnung (11) nach außen erstreckenden Abschnitt (2b) aufweist, der zur Befestigung des Dichtelements (2) gegen eine Stirnseite (9b) des Elastomerkörpers (1) angedrückt wird.

13. Verwendung nach einem der vorstehenden Ansprüche, wobei bei dem Pressdichtungssystem
das Dichtelement (2) ein Formteil (2c) und ein Dichtteil (2d) aufweist, wobei das Dichtteil (2d) aus einem gegenüber jenem des Formteils (2c) weicheren Material vorgesehen ist, und wobei das Formteil (2c) die Elastomerkörper-Durchgangsöffnung (11) axial gesehen zumindest teilweise bedeckt, dabei aber eine Durchlassöffnung (40) zum Hindurchführen der Leitung definiert, an welcher Durchlassöffnung (40) das Dichtteil (2d) zum Dichten gegen die Leitung angeordnet ist.

14. Verwendung nach einem der Ansprüche 1 bis 7, wobei bei dem Pressdichtungssystem
der Elastomerkörper (1) und das Dichtelement (2) einstückig miteinander ausgebildet sind, vorzugsweise monolithisch miteinander.

## Claims

1. Use of a press seal system for inserting into an opening (3) and sealing the opening (3) against a line (20), the press seal system having
an elastomer body (1) which defines a through-opening (11) and
a tensioning device (5) for tensioning the elastomer body (1), namely for compressing it axially with respect to a center axis (6) of the elastomer body through-opening (11) and, consequently, pressing an outer circumferential surface (7) of the elastomer body (1), with respect to the center axis (6), radially outwards for sealing,
wherein the press seal system (1,2) comprises further a seal member (2) for sealing against the line (20) which is led to or through the opening (3),
wherein the seal member (2) is decoupled from the deformation of the elastomer body (1), the seal member (2) being deformable radially more easily than the elastomer body (1), at least when the elastomer body (1) is tensioned, so that the seal member (2) can be sealed against the line (20) even when the elastomer body (1) has already been tensioned,
wherein, when using the press seal system, first, the elastomer body (1) is tensioned by the tensioning device (5), namely is compressed by tightening a tensioning bolt (5c) and, consequently, is pressed radially outwards with the outer circumferential surface (7) in a sealing manner, and wherein thereafter, when the elastomer body (1) is tensioned already, namely the tensioning bolt (5c) is tightened with a torque of at least 3 Nm, the seal member (2) is sealed against the line.

2. The use according to claim 1, wherein the elastomer body (1) is tensioned by the tensioning device (5) first, and thereafter, when the elastomer body (1) is tensioned already, the line is led through the elastomer body through-opening (11).

3. The use according to one of the preceding claims, in which press seal system
an inner wall surface (15) of the seal member (2), which faces the center axis (6) of the elastomer body through-opening (11), is, at least in an axial section (2a) provided for being pressed against the line (20), displaced radially inwards in comparison to an inner circumferential surface (10) of the elastomer body (1), the inner circumferential surface (10) lying radially opposite to the outer circumferential surface (7).

4. The use according to one of the preceding claims, in which press seal system
at least an axial section (2a) of the seal member (2), which axial section (2a) is provided for being pressed against the line (20), is displaced axially with respect to the elastomer body (1).

5. The use according to one of the preceding claims, in which press seal system
the seal member (2) has an inner diameter declining along the center axis (6) of the elastomer body through-opening (11), at least in a section of the seal member (2).

6. The use according to one of the preceding claims, in which press seal system
a support tube (12) is placed in the elastomer body through-opening (11), wherein the elastomer body (1) is, when being tensioned, pressed radially inwards against the support tube (12), the support tube (12) defining a through-opening for leading in or through the line (20).

7. The use according to one of the preceding claims, in which press seal system
a tensioning member (13), preferably a hose clamp, is provided outside on the seal member (2) in an axial section (2a) thereof, for pressing the seal member (2) against the line (20).

8. The use according to one of the preceding claims, in which press seal system
the elastomer body (1) and the seal member (2) are multi-piece with each other.

9. The use according to one of the preceding claims, in which press seal system
the seal member (2) is attached to the elastomer body (1), at least indirectly, in such a way that it can be demounted from the elastomer body (1), even when the latter is tensioned.

10. The use according to claim 9, in which press seal system
the tensioning device (5) comprises press bodies (5a,b) which are arranged at front faces (9a,b) of the elastomer body (1) lying axially opposite to each other, the elastomer body (1) being axially compressed between the press bodies (5a,b) during the tensioning, wherein the seal member (2) is releasably attached to one of the press bodies (5a,b).

11. The use of claims 9 or 10, wherein the seal member 2 is replaced by another seal member 2.

12. The use according to one of claims 8 to 11, in which press seal system
the seal member (2) comprises a section (2b) extending angled outwards, preferably perpendicularly to the center axis (6) of the elastomer body through-opening (11), the section (2b) being pressed against a front face (9b) of the elastomer body (1) for attaching the seal member (2).

13. The use according to one of the preceding claims, in which press seal system
the seal member (2) comprises a form part (2c) and a seal part (2d), wherein the seal part (2d) is made of a material which is softer than a material of which the form part (2c) is made, and wherein the form part (2c) covers the elastomer body through-opening (11) at least partly, seen in an axial direction, and wherein the form part (2c) defines a through-hole (40) for leading through the line (20), at which through-hole (40) the seal part (2d) is arranged for sealing against the line (20).

14. The use according to one of the claims 1 - 7, in which press seal system
the elastomer body (1) and the seal member (2) are one-piece with each other, preferably are monolithic with each other.

## Revendications

1. Utilisation d'un système de joint à compression destiné à être inséré dans une ouverture (3) et à assurer l'étanchéité de l'ouverture (3) vis-à-vis d'une conduite ou d'un câble, lequel système de joint à compression présente:
un corps en élastomère (1) délimitant une ouverture de passage (11), et
un dispositif de serrage (5) au moyen duquel le corps en élastomère (1) peut subir un serrage, à savoir qu'il peut être restreint axialement par rapport à un axe central (6) de l'ouverture de passage (11) du corps en élastomère, à la suite de quoi il peut être pressé hermétiquement vers l'extérieur, radialement par rapport à l'axe central (6), par une surface circonférentielle extérieure (7),
ledit système de joint à compression présentant en outre un élément d'étanchéité (2) destiné à être appliqué de manière étanche contre la conduite ou d'un câble rapportée sur l'ouverture (3) ou traversant l'ouverture (3),
lequel élément d'étanchéité (2) est découplé de la déformation du corps en élastomère (1), à savoir qu'il est, au moins à l'état serré du corps en élastomère (1), déformable radialement plus facilement que ne l'est le corps en élastomère (1), si bien que l'élément d'étanchéité (2) peut être appliqué de manière étanche contre la conduite ou le câble même lorsque le corps en élastomère (1) est déjà serré,
dans le cadre de laquelle utilisation on procédé tout d'abord au serrage du corps en élastomère (1) au moyen du dispositif de serrage (5), à savoir qu'on le restreint axialement en serrant un boulon de serrage (5c), à la suite de quoi il se presse hermétiquement vers l'extérieur, radialement, par une surface circonférentielle extérieure (7), et, uniquement après que le corps en élastomère (1) a été bien serré, c'est-à-dire que le boulon de serrage (5c) a été serré avec application d'un couple de serrage d'au moins 3 Nm, on applique de manière étanche l'élément d'étanchéité (2) contre la conduite ou le câble.

2. Utilisation selon la revendication 1, dans le cadre de laquelle on procède tout d'abord au serrage du corps en élastomère (1) au moyen du dispositif de serrage (5) et, uniquement après que le corps en élastomère (1) a bien été serré, on fait passer la conduite ou le câble à travers l'ouverture de passage (11) du corps en élastomère.

3. Utilisation selon l'une des revendications précédentes, dans le cadre de laquelle, dans le système de joint à compression,
une surface de paroi intérieure (15) de l'élément d'étanchéité (2) tournée vers l'axe central (6) de l'ouverture de passage (11) du corps en élastomère est décalée radialement vers l'intérieur, au moins dans une portion axiale (2a) destinée à se presser contre la conduite ou le câble (2a), par rapport à une surface circonférentielle intérieure (10) du corps en élastomère radialement opposée à la surface circonférentielle extérieure (7).

4. Utilisation selon l'une des revendications précédentes, dans le cadre de laquelle, dans le système de joint à compression,
au moins une portion axiale (2a) de l'élément d'étanchéité (2) qui est pressée contre la conduite ou le câble est décalée axialement par rapport au corps en élastomère (1).

5. Utilisation selon l'une des revendications précédentes, dans le cadre de laquelle, dans le système de joint à compression,
l'élément d'étanchéité (2) a diamètre intérieur qui va en diminuant, au moins par sections, le long de l'axe central (6) de l'ouverture de passage (11) du corps en élastomère.

6. Utilisation selon l'une des revendications précédentes, dans le cadre de laquelle, dans le système de joint à compression,
il est disposé un tuyau de support (12) dans l'ouverture de passage (11) du corps en élastomère, contre lequel d'une part le corps en élastomère (1) à l'état serré est pressé radialement vers l'intérieur et qui, d'autre part, délimite une ouverture de passage pour l'introduction ou la traversée de la conduite ou le câble.

7. Utilisation selon l'une des revendications précédentes, dans le cadre de laquelle, dans le système de joint à compression,
un élément de serrage (13) destiné à presser l'élément d'étanchéité (2) contre la conduite ou le câble, de préférence un collier de serrage, est agencé sur l'extérieur d'une portion axiale (2a) de l'élément d'étanchéité (2) qui est pressée contre la conduite ou le câble.

8. Utilisation selon l'une des revendications précédentes, dans le cadre de laquelle, dans le système de joint à compression,
le corps en élastomère (1) et l'élément d'étanchéité (2) sont conçus en plusieurs pièces l'un par rapport à l'autre.

9. Utilisation selon la revendication 8, dans le cadre de laquelle, dans le système de joint à compression,
l'élément d'étanchéité (2) est fixé au moins indirectement au corps en élastomère (1) de telle façon qu'il en est démontable également à l'état serré du corps en élastomère (1).

10. Utilisation selon la revendication 9, dans le cadre de laquelle, dans le système de joint à compression,
des corps de pression (5a,b) faisant partie du dispositif de serrage (5) sont agencés sur des faces terminales (9a,b) axialement opposées du corps en élastomère (1) et le corps en élastomère (1) est restreint axialement entre ceux-ci lors du serrage, ledit élément d'étanchéité (2) étant fixé à l'un des corps de pression (5a,b) de manière amovible.

11. Utilisation selon la revendication 9 ou 10, dans le cadre de laquelle l'élément d'étanchéité (2) est échangé contre un autre élément d'étanchéité (2).

12. Utilisation selon l'une des revendications 8 à 11, dans le cadre de laquelle, dans le système de joint à compression
l'élément d'étanchéité (2) présente une portion (2b) qui s'étend vers l'extérieur selon un certain angle, de préférence perpendiculairement à l'axe central (6) de l'ouverture de passage (11) du corps en élastomère, laquelle portion est pressée contre une face terminale (9b) du corps en élastomère (1) pour fixer l'élément d'étanchéité (2).

13. Utilisation selon l'une des revendications précédentes, dans le cadre de laquelle, dans le système de joint à compression,
l'élément d'étanchéité (2) présente une pièce moulée (2c) et une pièce d'étanchéité (2d), ladite pièce d'étanchéité (2d) étant prévue dans un matériau plus souple que celui de la pièce moulée (2c), et ladite pièce moulée (2c) recouvrant au moins partiellement l'ouverture de passage (11) du corps en élastomère, vue axialement, en définissant toutefois une ouverture de traversée (40) pour la traversée de la conduite ou le câble, au niveau de laquelle ouverture de traversée (40) la pièce d'étanchéité (2d) est appliquée de manière étanche contre la conduite ou le câble.

14. Utilisation selon l'une des revendications 1 à 7, dans le cadre de laquelle, dans le système de joint à compression,
le corps en élastomère (1) et l'élément d'étanchéité (2) sont conçus d'un seul tenant l'un avec l'autre, de préférence de façon monolithique.
